# EUROPEAN PATENT APPLICATION

(11) **EP 4 554 046 A1**
(43) Date of publication of application: **14.05.2025**
(21) Application number: 23835218.1
(22) Date of filing: 08.06.2023
(51) Int. Cl.: H02J 50/12

(54) **POWER TRANSMISSION DEVICE AND PROGRAM**

(30) Priority: 07.07.2022 JP 2022109648
(71) Applicant: DENSO CORPORATION, Kariya-city, Aichi 448-8661 (JP)
(72) Inventor: NAKAYASHIKI Yusei, Kariya-city, Aichi 448-8661 (JP); TAKAHASHI Masaya, Kariya-city, Aichi 448-8661 (JP); YAMAGUCHI Nobuhisa, Kariya-city, Aichi 448-8661 (JP)
(74) Representative: TBK
(86) International application number: PCT/JP2023/021335
(87) International publication number: WO 2024/009682

(57) **Abstract**

A power transmission device (100) for supplying electric power wirelessly to a power reception device (200) equipped with a power reception coil (212) includes: a power transmission resonance circuit (110) equipped with a power transmission coil (112) and a power transmission resonance capacitor (114) connected in parallel with the power transmission coil; a tertiary resonance circuit (310), and a power transmission control unit (180) that controls the tertiary resonance switching element. The tertiary resonance circuit (310) includes: a tertiary coil (312); a tertiary resonance capacitor (314) connected in parallel with the tertiary coil; and a tertiary resonance switching element (316) connected in parallel with the tertiary coil. The tertiary resonance switching element is operable to switch between an open state and a short-circuited state of the tertiary resonance switching element. When making a switch from an energized state, in which power is supplied to the power reception device, to a standby state, in which no power is supplied to the power reception device, the power transmission control unit short-circuits the tertiary resonance switching element to place the tertiary coil and the tertiary resonance capacitor in a non-resonance state.

## Description

### [Cross Reference to Related Application]

This application is based on and claims the benefit of priority from Japanese Patent Application No. 2022-109648 filed July 7, 2022, the contents of each of which are incorporated herein by reference.

### [Technical Field]

This disclosure relates to a power transmission device and a program for the same.

### [Background Art]

In a facing state where a power reception coil of a power reception device is facing a power transmission coil of a power transmission device, the input impedance is reduced to thereby supply electric power from the power transmission device to the power reception device. In a non-facing state, the input impedance of a power transmission resonance circuit is increased to thereby suppress the supply of current from the power transmission device to the power reception device (see, for example, JP 2021-23094 A). In this power transmission device, a semiconductor element, such as a bidirectional switch, is used as a switching circuit, and the magnitude of the input impedance of the power transmission resonance circuit is switched by switching the semiconductor element. In the following, the terms "contactless" and "wireless" are mostly exchangeable, and the terms "power supply" and "power transfer" are mostly exchangeable.

### [Summary of the Invention]

However, conventionally, a protection circuit may be required to prevent a so-called short circuit fault, where a semiconductor element fails in a conductive state, from provoking a fault in another component of the power transmission device. This gives rise to an issue that the number of components and the size of the power transmission device increase.

The present disclosure has been made to overcome at least part of the above issue, and can be implemented in the following embodiments and applications.

One aspect of the present disclosure provides a power transmission device for supplying electric power wirelessly to a power reception device equipped with a power reception coil. This power transmission device includes: a power transmission resonance circuit that includes a power transmission coil magnetically couplable with the power reception coil, and a power transmission resonance capacitor connected in series with the power transmission coil; and a tertiary resonance circuit. The tertiary resonance circuit includes: a tertiary coil magnetically couplable with both the transmission coil and the reception coil; a tertiary resonance capacitor connected in parallel with the tertiary coil; and a tertiary resonance switching element connected in parallel with the tertiary coil. The tertiary resonance switching element is operable to switch between an open state and a short-circuited state of the tertiary resonance switching element to switch between a resonance state and a non-resonance state of the tertiary resonance circuit. The power transmission device further includes a power transmission control unit that controls the tertiary resonance switching element. When making a switch from an energized state, in which power is supplied to the power reception device, to a standby state, in which no power is supplied to the power reception device, the power transmission control unit short-circuits the tertiary resonance switching element to place the tertiary coil and the tertiary resonance capacitor in the non-resonance state.

In this configuration of the power transmission device, short-circuiting of the tertiary resonance switching element allows the tertiary coil and the tertiary resonance capacitor to be placed in the non-resonance state. Therefore, even in the event of a short-circuit fault occurring in the tertiary resonance switching element, this can suppress or prevent damages to other components of the power transmission device without providing a protection circuit or other measures. This can suppress or prevent an increase in the number of parts or the size of the power transmission device.

### [Brief Description of the Drawings]

The above and other objects, features and advantages of the present disclosure will become more apparent from the following detailed description with reference to the accompanying drawings. The drawings are:
FIG. 1 is a schematic diagram of a power transmission device according to a first embodiment;
FIG. 2 is a schematic diagram of a power transmission device according to a second embodiment; and
FIG. 3 is a schematic diagram of a power transmission device according to a third embodiment.

### [Description of the Embodiments]

### A. First Embodiment:

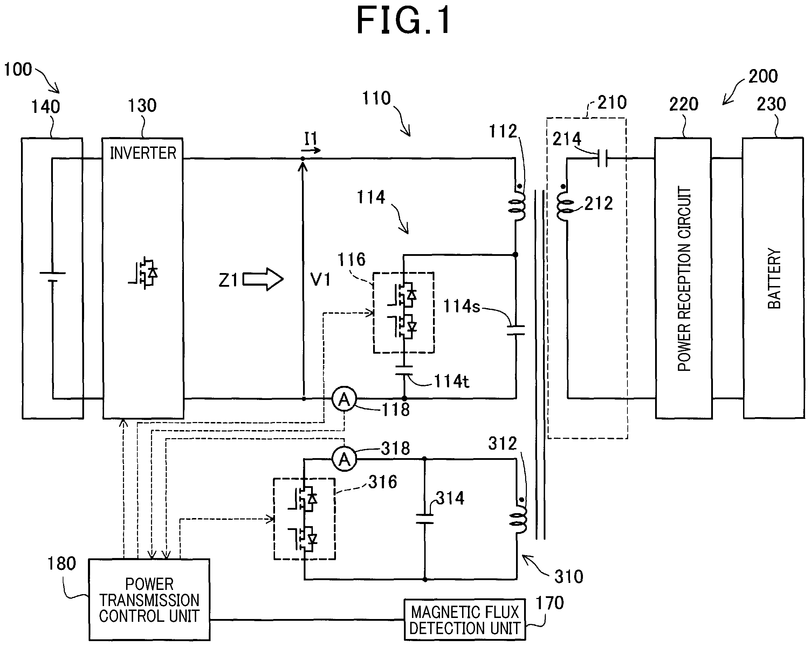

As illustrated in FIG. 1, the wireless power transfer system includes a power transmission device 100 according to the first embodiment and a power reception device 200 that is supplied with electric power wirelessly from the power transmission device 100. The power reception device 200 may be mounted to various devices that are actuated using electric power, such as electronic devices and electric vehicles. The power reception device 200 includes a power reception resonance circuit 210, a power reception circuit 220, and a battery 230.

The power reception resonance circuit 210 includes a power reception coil 212 and a power reception resonance capacitor 214 connected in series with the power reception coil 212. For example, a primary in-series secondary in-series capacitor based resonance system (referred to as an "SS system") is applied to the power reception resonance circuit 210. The power reception resonance circuit 210 is a resonance circuit that receives AC power induced in the power reception coil 212 in a resonant coupling condition in which the power reception coil 212 and the power transmission coil 112 are magnetically coupled.

The power reception circuit 220 converts the AC power output from the power reception resonance circuit 210 into DC power. The power reception circuit 220 includes, for example, a filter circuit, a rectification circuit that converts AC power into DC power, and a power conversion circuit that converts AC power into DC power suitable for charging the battery 230. The DC power output from the power reception circuit 220 may be used for charging the battery 230.

The power transmission device 100 includes a power transmission resonance circuit 110, a tertiary resonance circuit 310, and a power transmission control unit 180. In the example of FIG. 1, the power transmission device 100 further includes a current sensor 118, a power supply circuit 140, a power transmission circuit 130, and a magnetic flux detection unit 170. The power supply circuit 140 is, for example, an AC-DC converter circuit, which converts AC power from an AC power source, such as a grid power source, into DC power and supplies it to the power transmission circuit 130. The power transmission circuit 130 includes an inverter device or the like that converts DC power supplied from the power supply circuit 140 into AC power at a predefined operating frequency (angular frequency) and supplies it to the power transmission resonance circuit 110. The power transmission circuit 130 may further include a rectification circuit, a filter circuit, and other circuits.

The power transmission resonance circuit 110 transmits AC power induced in the power transmission coil 112 using the electromagnetic induction phenomenon to the power reception resonance circuit 210 of the power reception device 200. The power transmission resonance circuit 110 includes a power transmission coil 112 and a power transmission resonance capacitor 114 connected in series with the power transmission coil 112.

The power transmission resonance capacitor 114 is a resonance capacitor for resonating the power supplied to the power transmission coil 112. In the present embodiment, the power transmission resonance capacitor 114 includes a first capacitor 114t, a power transmission switching element 116 connected in series with the first capacitor 114t, and a second capacitor 114s connected in parallel with the first capacitor 114t and the power transmission switching element 116. The power transmission resonance capacitor 114 is a variable capacitor whose capacitance is variable depending on the on/off state of the power transmission switching element 116.

The power transmission switching element 116 functions as a current switching unit for switching the magnitude of the current flowing through the power transmission resonance circuit 110. In the present embodiment, the power transmission switching element 116 is a semiconductor element that controls current, such as an IGBT, MOSFET, or FET, and switches the value of the input impedance Z1 of the power transmission resonance circuit 110 under control of the power transmission control unit 180. As illustrated in FIG. 1, in the present embodiment, the power transmission switching element 116 is configured as a bidirectional switch. The method of switching the magnitude of the current flowing through the power transmission resonance circuit 110 may not be limited to switching the value of the input impedance, but may be a method of switching the value of the capacitance or turning on and off the power supply. The power transmission switching element 116 is not limited to a bidirectional switch, but may be a unidirectional switch.

The capacitance of the second capacitor 114s is set to a value less than the value of the capacitance of the first capacitor 114t. The first capacitor 114t is connected in parallel with the second capacitor 114s when the power transmission switching element 116 is short-circuited (on), and is disconnected when the power transmission switching element 116 is open (off). Therefore, the value of the capacitance of the power transmission resonance capacitor 114 becomes equal to the value of the capacitance of the second capacitor 114s when the power transmission switching element 116 is open, and becomes equal to the total value of the capacitance of the first capacitor 114t and the capacitance of the second capacitor 114s when the power transmission switching element 116 is short-circuited.

The sum of the capacitance of the first capacitor 114t and the capacitance of the second capacitor 114s is set using a predefined angular frequency derived from a predefined operating frequency at which the power transmission resonance capacitor 114 and the power transmission coil 112 resonate. The capacitance of the power transmission resonance capacitor 114 during power transfer to the power reception device 200 may be set to a relatively small value because the power transmission resonance capacitor 114 only has to resonate with the self-inductance of the power transmission coil 112. Therefore, the capacitance of the first capacitor 114t and the capacitance of the second capacitor 114s used in the power transmission resonance capacitor 114 may be set to relatively small values, thereby suppressing the increase in size of the capacitors. The capacitance of the second capacitor 114s defines the standby current that flows through the power transmission coil 112 in the absence of power transfer.

The current sensor 118 detects a current value I1 of the current flowing through the power transmission resonance circuit 110. A detection result of the current sensor 118 is used to determine whether the power transmission coil 112 and the power reception coil 212 are facing each other. Since the voltage applied to the power transmission coil 112 varies in the same manner as the current, a voltage sensor may be provided to detect a voltage value V1 of the voltage applied to the power transmission coil 112 instead of the current sensor 118. Instead of the current sensor 118, a magnetic flux detecting element, such as a magnetic sensor or coil, may be provided to detect the magnetic field (magnetic flux) in the vicinity of the power transmission coil 112. Instead of, or together with, the current sensor 118, for example, a shunt resistor or a relatively low inductance, such as wiring inductance, may be provided. Instead of, or together with, the current value, the voltage generated in the power transmission resonance capacitor 114 by the current flowing through the power transmission coil 112 may be detected.

As illustrated in FIG. 1, the tertiary resonance circuit 310 is a parallel resonance circuit in a so-called primary in-parallel secondary in-series system (referred to as a "PS system"), in which the tertiary coil 312 and the tertiary resonance capacitor 314 are connected in parallel with each other. In the present embodiment, the tertiary resonance circuit 310 is an independent circuit from the power transmission resonance circuit 110. The tertiary resonance circuit 310 includes a tertiary coil 312, a tertiary resonance capacitor 314 that is a resonance capacitor connected in parallel with the tertiary coil 312, and a tertiary resonance switching element 316 connected in parallel with the tertiary coil 312. The tertiary resonance circuit 310 is disposed so that the tertiary coil 312 is magnetically coupled with each of the power transmission coil 112 and the power reception coil 212. In FIG. 1, the state in which these coils are magnetically coupled with each other is indicated by two parallel straight lines.

In the present embodiment, the tertiary resonance circuit 310 includes a current sensor 318. The current sensor 318 detects a value of the current flowing through the tertiary resonance circuit 310. A detection result of the current sensor 318 is used to determine whether the power transmission coil 112 and the power reception coil 212 are in the facing or non-facing state. A voltage sensor that detects a value of the voltage applied to the tertiary resonance circuit 310, or a magnetic sensor that detects a magnetic flux generated in the tertiary resonance circuit 310 may be applied instead of the current sensor 318. In the present embodiment, an example has been described in which the power transmission device 100 is equipped with both the current sensor 118 and the current sensor 318. In an alternative, the power transmission device 100 may be equipped with only one of the current sensor 118 and the current sensor 318.

The tertiary resonance switching element 316 is a semiconductor element that controls the current, for example, an IGBT, MOSFET, or FET, and switches between the resonance state and non-resonance state between the tertiary coil 312 and the tertiary resonance capacitor 314 by changing the impedance of the tertiary coil 312 and the tertiary resonance capacitor 314. The tertiary resonance switching element 316 is controlled by the power transmission control unit 180. In this disclosure, the term "resonance state" does not only refer to a state in which the resonance capacitor and coil are resonating, but also to a state in which the resonance capacitor and coil are capable of resonance in terms of circuitry.

For example, in the configuration where the tertiary resonance switching element 316 is connected in series with the tertiary coil 312 and the tertiary resonance capacitor 314, if the tertiary resonance switching element 316, which is a semiconductor element, fails in a conductive state due to being stuck closed, that is, if a so-called short circuit fault occurs, the tertiary resonance circuit 310 will remain fixed in the resonance state. In this case, for example, if there is a power transmission coil 112 in the vicinity of a power transmission coil 112 of interest and the power transmission coil 112 different from the power transmission coil 112 of interest initiates power transfer to the power reception coil 212, the magnetic flux generated by the power transmission coil 112 different from the power transmission coil 112 of interest may be amplified by the tertiary resonance circuit 310. This may lead to an increased leakage electromagnetic field (EMF) or an increased voltage across the tertiary coil 312 in the tertiary resonance circuit 310. Furthermore, in this state, where the power transmission coil 112 different from the power transmission coil 112 of interest is magnetically coupled with the power transmission coil 112 of interest, the voltage across the power transmission coil 112 of interest may increase and the voltage exceeding the rated value may be applied to a semiconductor element such as the power transmission switching element 116, which may cause a short circuit fault.

**In** the present embodiment, in the state where the tertiary resonance switching element 316 is short-circuited (on), the tertiary coil 312 and the tertiary resonance capacitor 314 may be placed in the non-resonance state, and in the state where the tertiary resonance switching element 316 is opened (off), the tertiary coil 312 and the tertiary resonance capacitor 314 may be placed in the resonance state. Therefore, for example, even in the event where a short circuit fault occurs in the tertiary resonance switching element 316, the tertiary resonance circuit 310 is fixed in the non-resonance state, thereby suppressing or preventing faults in various parts of the power transmission device 100, such as a short circuit fault in the power transmission switching element 116.

The magnetic flux detection unit 170 detects a magnetic flux generated in the vicinity of the power transmission coil 112. In the power transmission device 100, an AC voltage supplied from the power transmission circuit 130 is applied between the terminals of the power transmission coil 112, and a magnetic flux is generated according to the AC standby current flowing through the power transmission coil 112. When the power reception device 200 approaches the power transmission device 100 in this state to be placed in the facing state, a magnetic coupling occurs between the power reception coil 212 and the power transmission coil 112, and the power reception coil 212 generates an induced magnetic flux according to an increased degree of coupling. The induced magnetic flux increases the magnetic flux chaining the power transmission coil 112. A detection result of the magnetic flux detection unit 170 is output to the power transmission control unit 180.

The power transmission control unit 180 may be a microcomputer including a CPU and a memory, or a logic circuit, although not shown. The power transmission control unit 180 acquires detection results of the magnetic flux detection unit 170, the current sensor 118, and the current sensor 318, and controls the turn-on and turn-off of each of the power transmission switching element 116 and the tertiary resonance switching element 316 according to the acquired detection results.

When the power transmission control unit 180 detects that the magnetic flux in the vicinity of the power transmission coil 112 has increased to or above a certain value, for example, by comparing the result of detection of the magnetic flux chaining the power transmission coil 112 by the magnetic flux detection unit 170 with a predefined threshold value, the power transmission control unit 180 determines that the power transmission coil 112 and the power reception coil 212 are in the facing state.

When determining that the power transmission coil 112 and the power reception coil 212 are in the facing state, the power transmission control unit 180 turns the power transmission device 100 to the energized state. More specifically, the power transmission control unit 180 short-circuits the power transmission switching element 116 to increase the capacitance of the power transmission resonance capacitor 114, thereby switching the input impedance Z1 of the power transmission resonance circuit 110 to a smaller value so that a larger current for power transfer flows through the power transmission resonance circuit 110. In addition, the power transmission control unit 180 opens the tertiary resonance switching element 316 to place the tertiary coil 312 and the tertiary resonance capacitor 314 in the resonance state. This results in the power transmission device 100 transitioning to the energized state, and power transfer from the power transmission coil 112 to the power reception coil 212 is initiated. The power reception resonance circuit 210 wirelessly receives AC power induced from the power transmission device 100 to the power reception coil 212 in a state where the power reception coil 212 and the power transmission coil 112 are magnetically coupled.

When the power transmission control unit 180 detects that the current flowing through the power transmission coil 112 has decreased to less than a certain value by comparing the result of detection of the current flowing through the power transmission resonance circuit 110 by the current sensor 118 with the predefined threshold value or by other means, the power transmission control unit 180 determines that the power transmission coil 112 and the power reception circuit 212 are in the non-facing state. The power transmission coil 112 and the power reception coil 212 may be determined to be in the non-facing state by comparing the result of detection of the current flowing through the tertiary resonance circuit 310 by the current sensor 318, instead of or together with the current sensor 118, with a predefined threshold value, or by other means.

When determining that the power transmission coil 112 and the power reception circuit 212 are in the non-facing state, the power transmission control unit 180 switches the power transmission device 100 to the standby state. More specifically, the power transmission control unit 180 opens the power transmission switching element 116 to reduce the capacitance of the transmission resonance capacitor 114, thereby switching the input impedance Z1 of the power transmission resonance circuit 110 to a larger value and switching the power transmission resonance circuit 110 to a state where a smaller current flows for standby and short-circuiting the tertiary resonance switching element 316 to place the tertiary coil 312 and the tertiary resonance capacitor 314 in the non-resonance state. This results in the power transmission device 100 transitioning to the standby state in which a standby current flows through the power transmission coil 112, and power transfer from the power transmission coil 112 to the power reception coil 212 is terminated. The term "standby state of the power transmission device 100" means a state in which the power transmission circuit 130 is being driven but power is not being transferred to the power reception device 200. The power transmission control unit 180 may further control the turn-on and turn-off of the power transmission circuit 130 and turn on and off the power supply from the power source to the power transmission resonance circuit 110. The power transmission control unit 180 may turn off the power transmission circuit 130 to switch the power transmission device 100 to a non-operating state, for example, when a predefined time has elapsed after the power transmission device 100 is placed on standby or when the power reception device 200 has not been detected. This can suppress power loss in the power transmission device 100.

In the present embodiment, the power transmission control unit 180 first opens (turns off) the power transmission switching element 116 and then short-circuits (turns on) the tertiary resonance switching element 316. That is, the power transmission switching element 116 is turned on when the current value I1 of the current flowing through the power transmission coil 112 has decreased. In such a configuration, occurrence of a surge voltage can be suppressed or prevented. In cases where occurrence of the surge voltage is not problematic, the short-circuiting of the tertiary resonance switching element 316 and the opening of the power transmission switching element 116 may be performed simultaneously or in any order.

As described above, in the power transmission device 100 of the present embodiment, the tertiary resonance circuit 310 includes the tertiary coil 312, the tertiary resonance capacitor 314, and the tertiary resonance switching element 316 connected in parallel with the tertiary coil 312. The tertiary resonance switching element 316 switches between the resonance state and the non-resonance state of the tertiary resonance circuit 310 by switching between opening and short-circuiting of the tertiary resonance switching element 316. When the power transmission control unit 180 makes a switch to the standby state in which no power is supplied to the power reception device 200, the power transmission control unit 180 short-circuits the tertiary resonance switching element 316 to place the tertiary coil 312 and the tertiary resonance capacitor 314 in the non-resonance state. According to the power transmission device 100 of the present embodiment, short-circuiting of the tertiary resonance switching element 316 allows the tertiary coil 312 and tertiary resonance capacitor 314 to be placed in the non-resonance state. Therefore, even in the event of a short circuit fault occurring in the tertiary resonance switching element 316, the tertiary resonance circuit 310 will be fixed in the non-resonance state. This can suppress or prevent an increase in the number of parts or the size of the power transmission device 100 without providing a protective circuit for preventing faults in various parts of the power transmission device 100 arising from the short circuit fault.

According to the power transmission device 100 of the present embodiment, when making a switch to the energized state to supply power to the power reception device 200, the power transmission control unit 180 opens the tertiary resonance switching element 316 to place the tertiary coil 312 and the tertiary resonance capacitor 314 in the resonance state. Since the tertiary resonance switching element 316 is opened during power transfer to the power reception device 200, no current flows through the tertiary resonance switching element 316. This can suppress or prevent the power loss in the tertiary resonance switching element 316. In addition, a large current during power transfer can be suppressed from flowing through the tertiary resonance switching element 316, which allows the current capacity of the tertiary resonance switching element 316 to be reduced, thereby suppressing or preventing an increase in the size of the power transmission device 100. Furthermore, this can suppress an increase in the standby capacitance arising from the parasitic capacitance of the tertiary resonance switching element 316 in the non-resonance state, thereby suppressing a resonance point from occurring on the power source side. Therefore, along with improvement of the electromagnetic compatibility (EMC) of the power transmission device 100, performance degradation of the power supply circuit 140 can be suppressed or prevented.

The power transmission device 100 of the present embodiment further includes the power transmission switching element 116 as a current switching unit controlled by the power transmission control unit 180 to switch the magnitude of the current flowing through the power transmission resonance circuit 110. When making a switch from the energized state to the standby state, the power transmission control unit 180 further controls the power transmission switching element 116 to switch the current flowing through the power transmission resonance circuit 110 to a lower current than the current flowing through the power transmission resonance circuit 110 in the energized state. When no power is being transferred to the power reception device 200, this can suppress or prevent unnecessary power that does not contribute to power transfer from being supplied to the power transmission resonance circuit 110.

According to the power transmission device 100 of the present embodiment, when transitioning from the energized state to the standby state, the power transmission control unit 180 controls the power transmission switching element 116 to switch the current flowing through the power transmission resonance circuit 110 to a larger value, and switch the power transmission resonance circuit 110 to the resonance state, and thereafter short-circuits the tertiary resonance switching element 316 to place the tertiary coil 312 and the tertiary resonance capacitor 314 in the non-resonance state. Therefore, this can suppress or prevent a sudden increase in the impedance, and can suppress or prevent a large surge voltage from occurring in the tertiary resonance circuit 310.

### B. Second Embodiment:

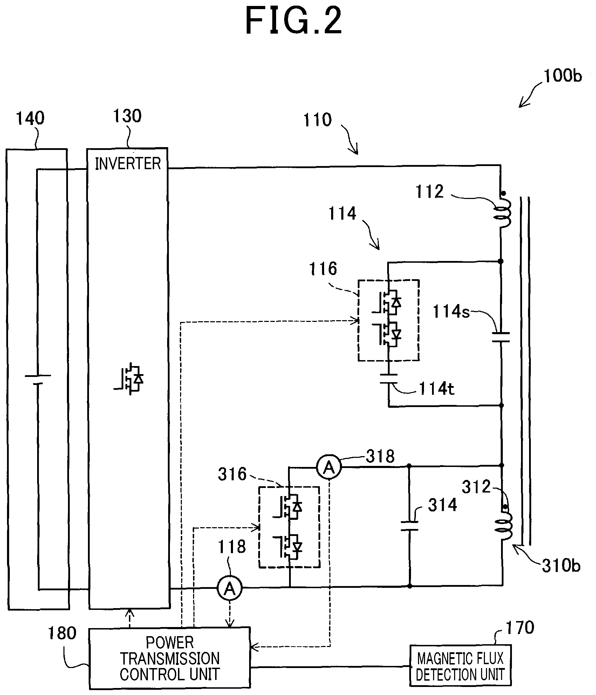

As illustrated in FIG. 2, a power transmission device 100b of a second embodiment differs from the power transmission device 100 of the first embodiment in that it is equipped with a tertiary resonance circuit 310b. The configuration of the other parts is the same. In the power transmission device 100 of the first embodiment illustrated in FIG. 1, the tertiary resonance circuit 310 is provided as an independent closed circuit from the power transmission resonance circuit 110. In contrast, in the power transmission device 100b of the present embodiment, the tertiary resonance circuit 310b is connected in series with the power transmission coil 112 of the power transmission resonance circuit 110.

The configuration of the tertiary resonance circuit 310b is the same as that of the tertiary resonance circuit 310 described in the first embodiment. The tertiary resonance capacitor 314 is connected in parallel with the tertiary coil 312, and the tertiary resonance switching element 316 is connected in parallel with the tertiary coil 312. The capacitance of the power transmission resonance capacitor 114 is set in the same manner as in the first embodiment, so that the power transmission resonance capacitor 114 and the power transmission coil 112 are set to resonate at the angular frequency derived from the predefined operating frequency when the power transmission switching element 116 is short-circuited. The capacitance of the tertiary resonance capacitor 314 is also set in the same manner as in the first embodiment, so that the tertiary resonance capacitor 314 and tertiary coil 312 are set to resonate at the angular frequency derived from the predefined operating frequency.

In the power transmission device 100b of the present embodiment, the tertiary resonance circuit 310b is connected in series with the power transmission resonance circuit 110. Similarly, in this configuration of the power transmission device 100b, short-circuiting of the tertiary resonance switching element 316 allows the tertiary coil 312 and tertiary resonance capacitor 314 to be placed in the non-resonance state. This can suppress or prevent an increase in the number of parts or the size of the power transmission device 100b without providing a protective circuit for preventing faults in various parts of the power transmission device 100b arising from the short circuit fault.

### C. Third Embodiment:

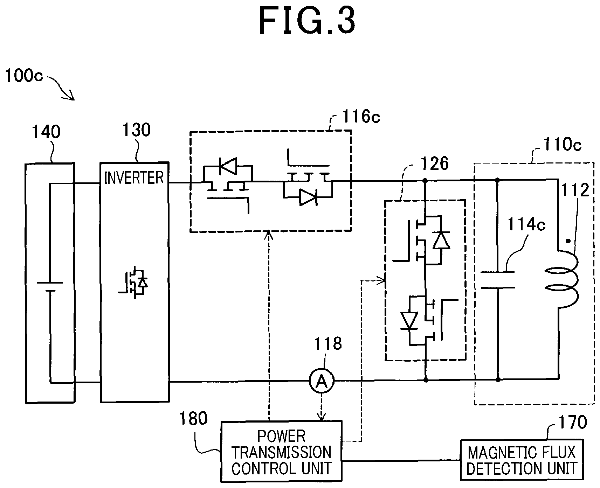

As illustrated in FIG. 3, a power transmission device 100c of a third embodiment includes a power transmission resonance circuit 110c, the current sensor 118, the power transmission resonance switching element 126, the power transmission circuit 130, the power supply circuit 140, the magnetic flux detection unit 170, and the power transmission control unit 180. The power transmission device 100c of the third embodiment differs from the power transmission device 100 of the first embodiment in that it is equipped with the power transmission resonance circuit 110c instead of the power transmission resonance circuit 110, in that it is not equipped with the tertiary resonance circuit 310, in that it is further equipped with the power transmission resonance switching element 126, and in that it is equipped with the power transmission switching element 116c instead of the power transmission switching element 116. The configuration of the other parts is the same.

The power transmission resonance circuit 110c differs from the power transmission resonance circuit 110 in that it is equipped with a power transmission resonance capacitor 114c instead of the power transmission resonance capacitor 114. The power transmission resonance capacitor 114c is a resonance capacitor for resonating the power supplied to the power transmission coil 112. Unlike the power transmission resonance capacitor 114, the power transmission resonance capacitor 114c is a capacitor that has a predefined capacitance, rather than a variable capacitor. The power transmission resonance circuit 110c is a parallel resonance circuit in which the power transmission coil 112 and the power transmission resonance capacitor 114c are connected in parallel, and is configured using the so-called PS system.

The power transmission switching element 116c turns on and off the power supply from the power transmission circuit 130 to the power transmission resonance circuit 110c under control of the power transmission control unit 180. In the present embodiment, the power transmission switching element 116c is a bidirectional switch that is provided between the power transmission circuit 130 and the power transmission resonance circuit 110c. The power transmission switching element 116c may use a semiconductor switching element that controls current, such as an IGBT, MOSFET, or FET, in the same manner as the power transmission switching element 116. The power transmission control unit 180 turns on the power supply from the power transmission circuit 130 to the power transmission resonance circuit 110c by short-circuiting (turning on) the power transmission switching element 116c, and turns off the power supply from the power transmission circuit 130 to the power transmission resonance circuit 110c by opening (turning off) the power transmission switching element 116c.

In the example of FIG. 3, the power transmission switching element 116c is disposed only on the positive-side between the power transmission circuit 130 and the power transmission resonance circuit 110c. In an alternative, the power transmission switching element 116c may be a bidirectional switch divided and disposed separately on the positive-side and negative-side. According to the power transmission device 100c configured in this manner, cutting the power supply from the power transmission circuit 130 to the power transmission resonance circuit 110c on the positive-side and negative-side separately can suppress or prevent the so-called common-mode noise generated on the positive-side and negative-side.

The power transmission resonance switching element 126 switches between the resonance state and non-resonance state of the power transmission coil 112 and the power transmission resonance capacitor 114c by changing the impedance of the power transmission coil 112 and the power transmission resonance capacitor 114c. The power transmission resonance switching element 126 may employ a semiconductor element for controlling current, such as an IGBT, MOSFET, or FET, just like the power transmission switching element 116c. The power transmission control unit 180 places the power transmission coil 112 and the power transmission resonance capacitor 114c in the non-resonance state by short-circuiting (turning on) the power transmission resonance switching element 126, and places the power transmission coil 112 and the power transmission resonance capacitor 114c in the resonance state in which they are capable of resonance by opening (turning off) the power transmission resonance switching element 126.

The power transmission device 100c of the present embodiment includes the power transmission resonance switching element 126 connected in parallel with the power transmission resonance circuit 110c, and the power transmission control unit 180 that controls the power transmission resonance switching element 126. The power transmission resonance switching element 126 switches between the resonance state and non-resonance state of the power transmission resonance circuit 110c by changing the impedance of the power transmission coil 112 and the power transmission resonance capacitor 114c. When switching the power transmission device 100c from the energized state to the standby state, the power transmission control unit 180 short-circuits the power transmission resonance switching element 126 to place the power transmission coil 112 and the power transmission resonance capacitor 114c in the non-resonance state. According to the power transmission device 100c of the present embodiment, short-circuiting the power transmission resonance switching element 126 allows the power transmission coil 112 and the power transmission resonance capacitor 114c to be placed in the non-resonance state. Therefore, for example, even in the event of a short-circuit failure occurring in the power transmission resonance switching element 126, the power transmission resonance circuit 110c will be fixed in the non-resonance state. This can suppress or prevent an increase in the number of parts or the size of the power transmission device 100c without providing a protective circuit for preventing faults in various parts of the power transmission device 100c arising from the short circuit fault.

According to the power transmission device 100c of the present embodiment, when making a switch from the standby state to the energized state, the power transmission control unit 180 opens the power transmission resonance switching element 126 to place the power transmission coil 112 and the power transmission resonance capacitor 114c in the resonance state. Since the power transmission resonance switching element 126 is opened during power transfer to the power reception device 200, no current flows through the power transmission resonance switching element 126. This can suppress or prevent power loss in the power transmission resonance switching element 126. In addition, a large current during power transfer can be suppressed from flowing through the power transmission resonance switching element 126, which allows the current capacity of the power transmission resonance switching element 126 to be reduced, thereby suppressing or preventing an increase in the size of the power transmission device 100c. Furthermore, this can suppress an increase in the standby capacitance arising from the parasitic capacitance of the power transmission resonance switching element 126 in the non-resonance state, thereby suppressing a resonance point from occurring on the power source side. Therefore, along with improvement of the electromagnetic compatibility (EMC) of the power transmission device 100c, performance degradation of the power supply circuit 140 can be suppressed or prevented.

The power transmission device 100c of the present embodiment includes the power transmission switching element 116c that is controlled by the power transmission control unit 180 to turn on and off the power supply from the power source to the power transmission resonance circuit 110c. When making a switch from the energized state to the standby state, the power transmission control unit 180 opens the power transmission switching element 116c to cease the power supply from the power source to the power transmission resonance circuit 110c. When no power is being transferred to the power reception device 200, this can suppress or prevent unnecessary power that does not contribute to power transfer from being supplied to the power transmission resonance circuit 110c.

### D. Other Embodiments:

(D1) As described exemplarily in the above embodiments, the primary in-parallel secondary in-series system is applied to each of the tertiary resonance circuit 310, the tertiary resonance circuit 310b, and the power transmission resonance circuit 110c. Alternatively, various circuit configurations other than the primary in-parallel secondary in-series system may be used for the tertiary resonance circuit 310, tertiary resonance circuit 310b, and power transmission resonance circuit 110c. For example, a primary in-parallel-series secondary in-series system (referred to as a "PSS system") with a plurality of resonance capacitors connected in parallel with the power transmission coil may be used.

(D2) In the first and second embodiments described above, the transmission resonance capacitor 114 includes two capacitors connected in parallel to form a variable capacitor. In an alternative, the transmission resonance capacitor 114 may be a variable capacitor whose capacitance changes according to the input control voltage. In this case, the power transmission switching element 116 outputs a control voltage.

(D3) In the first and second embodiments described above, the power transmission switching element 116 is provided for switching the magnitude of the current flowing through the power transmission resonance circuit 110. In an alternative, for example, in cases where there is no need to pass the standby current through the power transmission resonance circuit 110, the power transmission device may be configured without the power transmission switching element 116. Similarly, the power transmission device 100c of the third embodiment may also be configured without the power transmission switching element 116c.

(D4) In the first embodiment described above, the power transmission resonance capacitor 114 includes the first capacitor 114t, the power transmission switching element 116 connected in series with the first capacitor 114t, and the second capacitor 114s connected in parallel with the first capacitor 114t and the power transmission switching element 116. In an alternative, for example, the second capacitor 114s may be removed. That is, the power transmission resonance circuit 110 may be equipped with the power transmission resonance capacitor 114 including the first capacitor 114t and the power transmission switching element 116 connected in series with the first capacitor 114t. In this case, the capacitance of the power transmission resonance capacitor 114 becomes equal to the capacitance of the first capacitor 114t when the power transmission switching element 116 is short-circuited. When the power transmission switching element 116 is open, the output capacitance of the power transmission switching element 116 defines the standby current. Such a configuration can further reduce the standby current flowing through the power transmission resonance circuit 110.

The control device and the method thereof described in the present disclosure may be realized by a dedicated computer provided by configuring a processor and memory programmed to perform one or more functions embodied in a computer program. Alternatively, the control device and the method thereof described in the present disclosure may be realized by a dedicated computer provided by configuring a processor with one or more dedicated hardware logic circuits. Alternatively, the control device and the method thereof described in the present disclosure may be realized by one or more dedicated computers configured by a combination of a processor and memory programmed to perform one or more functions, and a processor configured with one or more hardware logic circuits. In addition, the computer program may be stored in a computer-readable, non-transitory tangible storage medium as instructions to be executed by a computer.

The present disclosure is not limited to any of the embodiments described above but may be implemented by a diversity of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

## Claims

1. A power transmission device (100, 100b) for supplying electric power wirelessly to a power reception device (200) equipped with a power reception coil (212), the power transmission device comprising:
a power transmission resonance circuit (110) that includes a power transmission coil (112) magnetically couplable with the power reception coil, and a power transmission resonance capacitor (114) connected in series with the power transmission coil; and
a tertiary resonance circuit (310, 310b) that includes:
a tertiary coil (312) magnetically couplable with both the transmission coil and the reception coil;
a tertiary resonance capacitor (314) connected in parallel with the tertiary coil; and
a tertiary resonance switching element (316) connected in parallel with the tertiary coil, the tertiary resonance switching element being operable to switch between an open state and a short-circuited state of the tertiary resonance switching element to switch between a resonance state and a non-resonance state of the tertiary resonance circuit; and
a power transmission control unit (180) that controls the tertiary resonance switching element, wherein
when making a switch from an energized state, in which power is supplied to the power reception device, to a standby state, in which no power is supplied to the power reception device, the power transmission control unit short-circuits the tertiary resonance switching element to place the tertiary coil and the tertiary resonance capacitor in the non-resonance state.

2. The power transmission device according to claim 1, wherein
when making a switch from the standby state to the energized state, the power transmission control unit opens the tertiary resonance switching element to place the tertiary coil and the tertiary resonance capacitor in a resonance state.

3. The power transmission device according to claim 1, further comprising
a current switching unit (116) that is controlled by the power transmission control unit to switch a magnitude of a current flowing through the power transmission resonance circuit, wherein
when making a switch from the energized state to the standby state, the power transmission control unit further controls the power transmission switching element to switch the current flowing through the power transmission resonance circuit to a lower current than a current flowing through the power transmission resonance circuit in the energized state.

4. The power transmission device according to claim 3, wherein
when transitioning from the energized state to the standby state, the power transmission control unit controls the power transmission switching element to, after switching the current flowing through the power transmission resonance circuit to the lower current, short-circuit the tertiary resonance switching element to place the tertiary coil and the tertiary resonance capacitor in the non-resonance state.

5. The power transmission device according to any one of claims 1 to 4, wherein
the tertiary resonance circuit is connected in series with the power transmission resonance circuit.

6. A power transmission device (100c) for supplying electric power wirelessly to a power reception device (200) equipped with a power reception coil (212), the power transmission device comprising:
a power transmission resonance circuit (110c) that includes a power transmission coil (112) magnetically couplable with the power reception coil, and a power transmission resonance capacitor (114c) connected in parallel with the power transmission coil; and
a power transmission resonance switching element (126) that is connected in parallel with the power transmission resonance circuit, and is operable to switch between a resonance state and a non-resonance state of the power transmission resonance circuit by switching an impedance of the power transmission coil and the power transmission resonance capacitor;
a power transmission control unit (180) that controls the power transmission resonance switching element, wherein
when making a switch from an energized state, in which electric power is supplied to the power reception device, to a standby state, in which no electric power is supplied to the power reception device, the power transmission control unit short-circuits the power transmission resonance switching element to place the power transmission coil and the power transmission resonance capacitor in the non-resonance state.

7. The power transmission device according to claim 6, wherein
when making a switch from the standby state to the energized state, the power transmission control unit opens the power transmission resonance switching element to place the power transmission coil and the power transmission resonance capacitor in the resonance state.

8. The power transmission device according to claim 6, further comprising
a power transmission switching element (116c) that is controlled by the power transmission control unit to turn on and off power supply from a power source to the power transmission resonance circuit, wherein
when making a switch from the energized state to the standby state, the power transmission control unit opens the power transmission switching element to cease the power supply from the power source to the power transmission resonance circuit.

9. A program executable by a computer incorporated in a power transmission device (100, 100b) for supplying electric power wirelessly to a power reception device (200) equipped with a power reception coil (212), wherein
the power transmission device comprises a transmission coil (112) that is magnetically couplable with the reception coil and a tertiary resonance circuit (310, 310b), the tertiary resonance circuit comprising: a tertiary coil (312) that is magnetically couplable with both the reception coil and the transmission coil (112); a tertiary resonance capacitor (314) connected in parallel with the tertiary coil; and a tertiary resonance switching element (316) connected in parallel with the tertiary coil, the tertiary resonance switching element being operable to switch between opening and short-circuiting of the tertiary resonance switching element to switch between a resonance state and a non-resonance state of the tertiary resonance circuit, and
the program causes the computer to implement a function of, when making a switch from an energized state, in which power is supplied to the power reception device, to a standby state, in which no power is supplied to the power reception device, short-circuiting the tertiary resonance switching element of the tertiary resonance circuit to place the tertiary coil and the tertiary resonance capacitor in a non-resonance state.
